# EUROPEAN PATENT APPLICATION

(11) **EP 2 902 676 A1**
(43) Date of publication of application: **05.08.2015**
(21) Application number: 13842973.3
(22) Date of filing: 24.06.2013
(51) Int. Cl.: F16H 63/42

(54) **GEAR POSITION DETECTING DEVICE OF SECONDARY GEARBOX OF TRANSMISSION**

(30) Priority: 27.09.2012 CN 201220500477 U
(71) Applicant: Shaanxi Fast Gear Co., Ltd., Xi'an, Shaanxi 710077 (CN)
(72) Inventor: ZHANG, Haitao, Shaanxi 710119 (CN); YIN, Chongyi, Shaanxi 710119 (CN); LIU, Yi, Shaanxi 710119 (CN); YANG, Lin, Shaanxi 710119 (CN)
(74) Representative: Tappe, Udo
(86) International application number: PCT/CN2013/077778
(87) International publication number: WO 2014/048146

(57) **Abstract**

A gear position detecting device of a secondary gearbox of a transmission. The device transmits a signal of the gear position of the secondary gearbox to a signal switch (5) by a step on a shifting fork (8) of the secondary gearbox or a step on a shifting fork shaft of the secondary gearbox. The signal switch (5) is arranged on the side of a back cover (7) and is lower than a maximum outline plane of the transmission. A step for pushing the signal switch (5) of the secondary gearbox is arranged on the shifting fork (8) or the shifting fork shaft of the secondary gearbox. Therefore, the signal of the gear position can be transmitted to the signal switch (5) by the shifting fork (8) or the shifting fork shaft of the secondary box so as to guide the driver.

## Description

The present application claims the benefit of priority to Chinese Patent Application No. 201220500477.2, titled "DEVICE FOR DETECTING GEAR POSITION OF AUXILIARY TRANSMISSION OF TRANSMISSION", filed with the Chinese State Intellectual Property Office on September 27, 2012, the entire disclosure of which is incorporated herein by reference.

### TECHNICAL FIELD

The present application relates to a transmission, and particularly to a device for detecting a gear position of an auxiliary transmission of a transmission.

### BACKGROUND

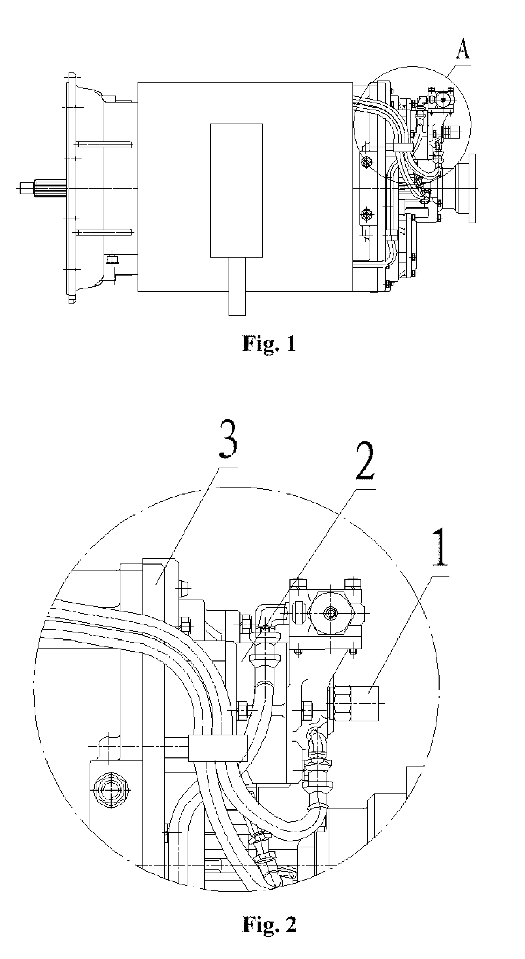

For a transmission of a structure having a main transmission and an auxiliary transmission, the auxiliary transmission is generally provided with a high gear and a low gear, and when the auxiliary transmission is required to shift gear, a device for detecting a gear position of the auxiliary transmission is required to provide an operation prompt for a driver. A conventional transmission of a structure having a main transmission and an auxiliary transmission is illustrated in Figures 1 to 3. As shown in the figures, the device for detecting the gear position of the auxiliary transmission is an auxiliary transmission high-low gear pressure switch, which detects a gear position by detecting the position of a cylinder of the auxiliary transmission. A high-low gear pressure switch 1 of the auxiliary transmission is arranged at a rear end of a cylinder assembly 2 of the auxiliary transmission, and the cylinder assembly of the auxiliary transmission is installed at a rear end of a rear cover 3 of the transmission. When the auxiliary transmission is required to shift gear, a shifting fork shaft 4 of the auxiliary transmission provides a signal to the high-low gear pressure switch 1 of the auxiliary transmission. Due to such arrangement, the high-low gear pressure switch of the auxiliary transmission is located at a rearmost end of the whole transmission, and is higher than a rear end surface of a cylinder cover, which results in many adverse impacts. When a rear-mounted device, such as a power takeoff or a retarder, is required to be installed at the rear end of the transmission, the high-low gear pressure switch of the auxiliary transmission must be removed; otherwise interference may be caused. However, with the pressure switch of the auxiliary transmission being removed, the driver cannot acquire the information about whether or not the gear shift operation of the auxiliary transmission is completed, which may cause great security risks.

In view of the above defaults, it is necessary to provide a device for detecting a gear position of an auxiliary transmission of a transmission to solve the above technical problems.

### SUMMARY

The technical problem to be solved by the present application is to provide a device for detecting a gear position of an auxiliary transmission of a transmission to avoid defects in the conventional technology.

For solving the above technical problem, the following technical solutions are provided in the present application.

A device for detecting a gear position of an auxiliary transmission of a transmission is provided, which includes an auxiliary transmission shifting fork shaft, an auxiliary transmission shifting fork, a signal switch, wherein the auxiliary transmission shifting fork or the auxiliary transmission shifting fork shaft is provided with a contact device configured to be separated from or to contact the signal switch, and when the auxiliary transmission shifting fork or the auxiliary transmission shifting fork shaft moves axially, the contact device contacts the signal switch to provide a gear-shifting signal to the signal switch.

According to a preferred embodiment of the present application, the contact device is a groove or a protruding portion arranged on the auxiliary transmission shifting fork shaft or the auxiliary transmission shifting fork.

According to a preferred embodiment of the present application, the signal switch is arranged at a side of a rear cover housing.

According to a preferred embodiment of the present application, the signal switch is arranged at a position lower than a maximum contour plane of the transmission.

The high-low gear switch arrangement of an auxiliary transmission of a transmission according to the present application has at least the following advantageous. The auxiliary transmission shifting fork or the auxiliary transmission shifting fork shaft according to the present application is provided with a contact device configured to be separated from or to contact the signal switch. In this way, when it is required to shift gear, the auxiliary transmission shifting fork or the auxiliary transmission shifting fork shaft moves axially, and when the gear shifting operation is completed, the contact device on the auxiliary transmission shifting fork or the auxiliary transmission shifting fork shaft contacts the auxiliary transmission signal switch, thereby transmitting a signal to the auxiliary transmission signal switch for guiding a driver.

### BRIEF DESCRIPTION OF THE DRAWINGS

Figure 1 is an arrangement diagram of a high-low gear switch of an auxiliary transmission in the conventional technology;
Figure 2 is a partially enlarged view of part A in Figure 1;
Figure 3 is an arrangement diagram of a shifting fork shaft of the auxiliary transmission in the conventional technology;
Figure 4 is an arrangement diagram of a high-low gear switch of an auxiliary transmission according to the present application;
Figure 5 is a partially enlarged view of part B in Figure 4; and
Figure 6 is an arrangement diagram of an auxiliary transmission shifting fork, a pressure switch and a rear cover housing.

### DETAILED DESCRIPTION

The present application is further described in detail hereinafter in conjunction with the accompanying drawings.

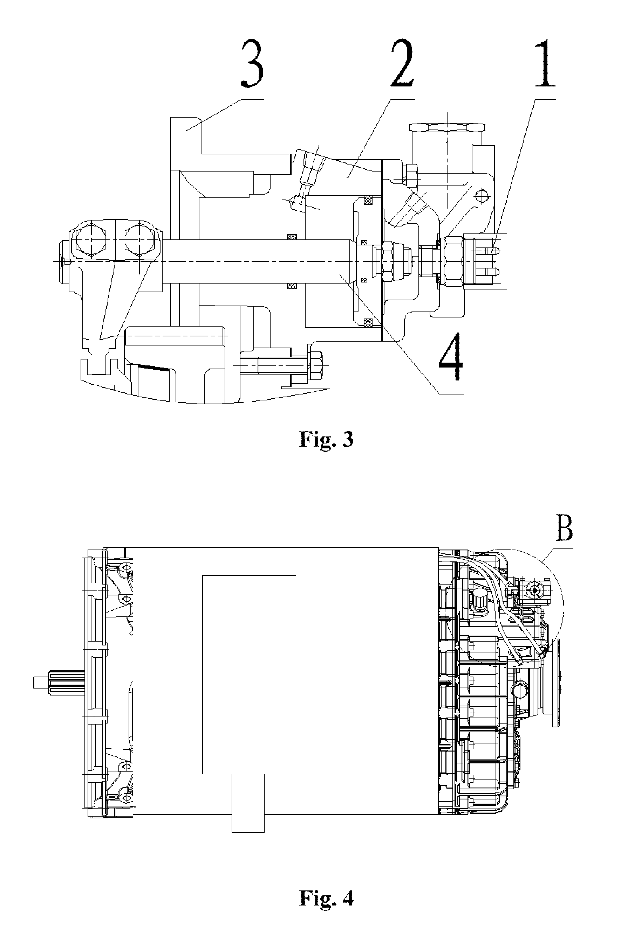

Reference is made to Figures 4 to 6. A device for detecting a gear position of an auxiliary transmission of a transmission is provided, which transmits a signal of the gear position of the auxiliary transmission to a signal switch via a step arranged on a shifting fork or a shifting fork shaft of the auxiliary transmission.

A device for detecting the gear position of the transmission auxiliary transmission is provided according to the present application. An auxiliary transmission signal switch 5 is arranged at a side of a rear cover housing 7. Further, a groove or a protruding portion is provided on an auxiliary transmission shifting fork 8 or an auxiliary transmission shifting fork shaft, thereby ensuring that an action signal of the auxiliary transmission signal switch 5 may be accurately provided by the auxiliary transmission shifting fork 8 or the auxiliary transmision shifting fork shaft.

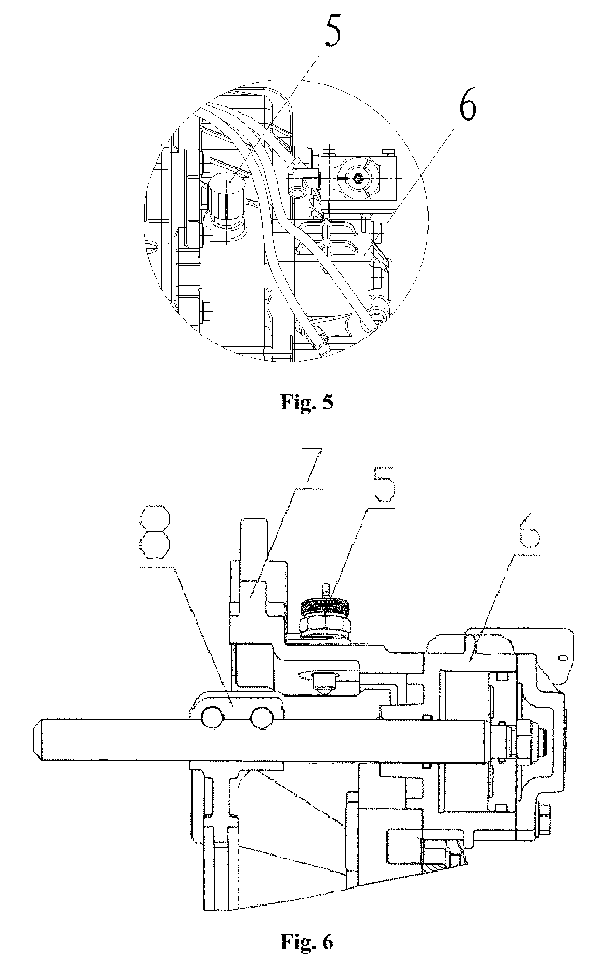

According to the present application, the auxiliary transmission signal switch 5 is arranged on the side of the rear cover housing 7, the auxiliary transmission shifting fork 8 or the auxiliary transmission shifting fork shaft is provided with the groove or the protruding portion, and the signal of the auxiliary transmission signal switch 5 is provided by the groove or the protruding portion arranged on the auxiliary transmission shifting fork 8 or the auxiliary transmission shifting fork shaft. When the auxiliary transmission is required to shift gear, the auxiliary transmission shifting fork 8 or the auxiliary transmission shifting fork shaft moves axially, and when the auxiliary transmission shifting fork 8 is engaged in the right position, the groove or the protruding portion on the auxiliary transmission shifting fork 8 or the auxiliary transmission shifting fork shaft may contact the auxiliary transmission signal switch 5, thereby transmitting a signal to the auxiliary transmission signal switch 5. The auxiliary transmission shifting fork 8 according to the present application is shown in Figure 6, and a rear end of the shifting fork is provided with a step structure for pushing the signal switch when the auxiliary transmission is in gear shifting operation.

The above description is only an embodiment of the present application, rather than all embodiments or sole embodiment of the present application. Any equivalent variation made to the solutions of the present application by the ordinary skills in the art based on the specification of the present application are all deemed to fall into the scope defined by the claims of the present application.

## Claims

1. A device for detecting a gear position of an auxiliary transmission of a transmission, comprising an auxiliary transmission shifting fork shaft, an auxiliary transmission shifting fork, a signal switch (5), wherein the auxiliary transmission shifting fork or the auxiliary transmission shifting fork shaft is provided with a contact device configured to be separated from or to contact the signal switch, and when the auxiliary transmission shifting fork or the auxiliary transmission shifting fork shaft moves axially, the contact device contacts the signal switch to provide a gear-shifting signal to the signal switch.

2. The device for detecting the gear position of the auxiliary transmission of the transmission according to claim 1, wherein the contact device is a groove or a protruding portion arranged on the auxiliary transmission shifting fork shaft or the auxiliary transmission shifting fork.

3. The device for detecting the gear position of the auxiliary transmission of the transmission according to claim 1 or claim 2, wherein the signal switch is arranged at a side of a rear cover housing.

4. The device for detecting the gear position of the auxiliary transmission of the transmission according to claim 3, wherein the signal switch is arranged at a position lower than a maximum contour plane of the transmission.
